# EUROPÄISCHE PATENTSCHRIFT

(11) **EP 2 297 902 B1**
(45) Veröffentlichungstag und Bekanntmachung des Hinweises auf die Patenterteilung: **23.05.2012**
(21) Anmeldenummer: 10708996.3
(22) Anmeldetag: 16.03.2010
(51) Int. Cl.: H04L 12/40, H04L 12/24, H04L 29/12

(54) **PROTOKOLLBESCHLEUNIGERMODUL MIT PAKETWEITERLEITUNGSFUNKTION UND BETRIEBSVERFAHREN FÜR EINEN SENDEREMPFÄNGER ZUR SCHNELLEN WEITERLEITUNG VON DATENPAKETEN**
PROTOCOL ACCELERATOR MODULE WITH PACKET FORWARDING FUNCTION AND METHOD OF OPERATION FOR A TRANSCEIVER FOR THE RAPID FORWARDING OF DATA PACKETS
MODULE ACCÉLÉRATEUR DE PROTOCOLE AVEC FONCTION D'ACHEMINEMENT DE PAQUETS ET PROCÉDÉ DE FONCTIONNEMENT D'UN ÉMETTEUR-RÉCEPTEUR POUR L'ACHEMINEMENT RAPIDE DE PAQUETS DE DONNÉES

(30) Priorität: 24.03.2009 DE 102009001821
(43) Veröffentlichungstag der Anmeldung: 23.03.2011
(73) Patentinhaber: IHP GmbH-Innovations for High Performance Microelectronics / Leibniz-Institut für innovative Mikroelektronik, 15236 Frankfurt / Oder (DE)
(72) Erfinder: DIETTERLE, Daniel, 12459 Berlin (DE); LANGENDÖRFER, Peter, 15234 Frankfurt (Oder) (DE)
(74) Vertreter: Eisenführ, Speiser & Partner
(86) Internationale Anmeldenummer: PCT/EP2010/053388
(87) Internationale Veröffentlichungsnummer: WO 2010/108825

(56) Entgegenhaltungen:
- DE-A1- 19 648 073
- DE-A1-102005 021 849
- US-A- 5 751 715

## Beschreibung

Die vorliegende Erfindung betrifft ein Protokollbeschleunigermodul für eine Datenübertragungs-Protokollebene eines Senderempfängers, insbesondere, jedoch nicht ausschließlich, zur schnellen Weiterleitung von Datenpaketen in drahtlosen Sensornetzwerken im Zeitmultiplex-Verfahren gemäß dem IEEE 802.15.4 Standard.

Weiterhin betrifft die Erfindung ein Betriebsverfahren für einen Senderempfänger zur schnellen Weiterleitung von Datenpaketen, ebenfalls insbesondere, jedoch nicht ausschließlich, in drahtlosen Sensornetzwerken im Zeitmultiplex-Verfahren gemäß dem IEEE 802.15.4 Standard.

Der IEEE 802.15.4 Standard legt Protokolle für die erste Schicht, die Bitübertragungsschicht, und für Teile der zweiten Schicht, die Medienzugriffsschicht der Datensicherungsschicht, des ISO/OSI-(International Standardization Organisation / Open Systems Interconnection) Referenzmodells fest.

Der genannte Standard unterstützt eine drahtlose Kommunikation in einem Funknetz, bei dem Senderempfänger des Netzwerks mit Datenraten bis zu 250 Kilo-bit pro Sekunde (kbps) Datenpakete senden und empfangen. Er zielt insbesondere auf eine sehr geringe Komplexität der Netzwerkstruktur, die aufgrund geringer Systemanforderungen den teilnehmenden Senderempfängern einen über mehrere Monate und möglicherweise über mehrere Jahre andauernden Batteriebetrieb ermöglicht. Die Entfernungen zwischen den jeweiligen Senderempfängern eines Netzwerks dieses Standards betragen üblicherweise einige Meter, wie 10 m. Anwendung findet der Standard beispielsweise bei Sensornetzwerken, die in der Fertigungsautomatisierungstechnik oder bei interaktiven Spielzeugen eingesetzt werden.

Nachfolgend wird der Aufbau eines Netzwerkes gemäß dem IEEE 802.15.4 Standard näher beschrieben. Zur Umsetzung des IEEE 802.15.4 Standards (IEEE Standard 802, "Part 15.4: Wireless Medium Access Control (MAC) and Physical Layer (PHY) Specifications for Low-Rate Wireless Personal Area Networks," 2006) ist ein besonders ausgebildeter Senderempfänger, ein sogenannter Koordinator vorgesehen, der in der Fachsprache auch als Full Function Device (FFD) bezeichnet wird. Ihm zugeordnet sind eine Reihe regulär ausgebildeter Senderempfänger, die als Reduced Function Devices (RFD) bezeichnet werden.

Die RFDs können nicht direkt miteinander kommunizieren, sondern nur über den Koordinator. Der Koordinator detektiert weiterzuleitende Datenpakete und übermittelt diese an den oder die designierten Empfänger. Außerdem kann der Koordinator eine Schnittstelle zu anderen, wie auch immer gearteten, Datennetzwerken umfassen, beispielsweise zu Bluetooth- oder WLAN-Funknetzen. In diesem Zusammenhang wird er auch als "Access Point" bezeichnet.

Zur Vermeidung von Kollisionen aufgrund mehrerer gleichzeitig versendeter Datenpaketen wird ein Zeitmultiplex-Verfahren (engl.: Time Division Multiplex Access, TDMA) angewendet, das ebenfalls vom Koordinator organisiert sein kann. Dazu sendet der Koordinator in regelmäßigen Abständen sogenannte Beacon-Datenblöcke an alle ihm zugehörigen RFDs, aus dem die RFDs entnehmen können, in welchen Zeitschlitzen sie Datenpakete senden dürfen. In einem Zeitschlitz darf jeweils nur ein Senderempfänger Datenpakete senden. Zeitschlitze werden auch an den Koordinator selbst vergeben, und zwar zum einen solche, die ein Versenden eigener Datenpakete des Koordinators erlauben und zum anderen solche, die zum Versenden weiterzuleitender Datenpakete vorgesehen sind. Letztere Zeitschlitze enthalten ebenfalls die Information, für welches Empfänger-RFD der Zeitschlitz bestimmt ist.

Ein Datenpaket umfasst bei diesem Standard einen Datenpaketkopf und einen Nutzdatenteil. Im Datenpaketkopf sind maximal zwei Adressen enthalten: der Absender und das unmittelbare Ziel. Der Nutzdatenteil ist in der Regel einige Bytes groß. Zur Vermeidung von Datenpaketkollisionen sieht der Standard neben dem Versand von Beacon-Datenblöcke durch den Koordinator auch alternative Ansätze zur Organisation des TDMA-Verfahrens vor.

Im Protokoll ist weiter festgelegt, dass sämtliche zu übertragende Datenpakete mit einem Fehlererkennungscode versehen werden. Dafür wird ein sogenannter Cyclic Redundancy Check (CRC-) Algorithmus verwendet, der über alle Bytes eine Prüfsumme ausrechnet und an das Ende des Datenpaketes stellt. Die Empfänger des Datenpaketes rechnen ihrerseits die CRC-Prüfsumme über die empfangenen Bytes aus und vergleichen das Ergebnis mit dem mitgeschickten, vom Sender ermittelten, Wert. Stimmen beide Prüfsummen überein, ist das Datenpaket mit sehr hoher Wahrscheinlichkeit korrekt übertragen worden, ansonsten wird es als fehlerhaft erkannt und verworfen.

Die Informationsübertragung von einem ersten RFD (beispielsweise ein Sensor) zu einem zweiten RFD (beispielsweise ein Aktor) nimmt folglich zwei Zeitschlitze in Anspruch. In einem ersten Zeitschlitz wird ein Datenpaket von dem ersten RFD zu dem Koordinator gesendet und in einem, durchaus nicht unmittelbar folgenden, zweiten Zeitschlitz erfolgt der Versand vom Koordinator zum zweiten RFD.

Der Koordinator muss zur Weiterleitung der Datenpakete dieselben dekodieren, zwischenspeichern und zum Senden im richtigen Zeitschlitz vorbereiten. In heutigen Anwendungen des genannten Standards wird die Ausführung eines Teils des Medienzugriffsprotokolls (neben der digitalen und analogen Signalverarbeitung) in Hardware realisiert, und zwar die Funktionalität, die das Datenpaket auf Übertragungsfehler prüft und eine Fehlerprüfsumme zu den Nutzdaten hinzufügt, eventuell eine Filterung des Datenpakets basierend auf den Adressinformationen im Datenpaketkopf vornimmt und automatisch Bestätigungen (Acknowledgement-Pakete) an den Sender schickt. Ein empfangenes Datenpaket wird in einem senderseitigen Zwischenspeicher abgelegt, auf den ein Mikrocontroller zugreifen kann. Eine Software-Routine prüft u.a., ob es sich bei dem Datenpaket um ein weiterzuleitendes Datenpaket handelt. Wird dies bejaht, so wird ein Transfer des Datenpaketes vom empfängerseitigen Zwischenspeicher in einen senderseitigen Zwischenspeicher veranlasst. Die Datenpakete des senderseitigen Zwischenspeichers werden auf einer "First In, First Out" (FIFO) - Basis versendet. Die Verarbeitung durch die Software ist sehr zeitaufwendig und mit einer Interrupt-Verzögerung verbunden.

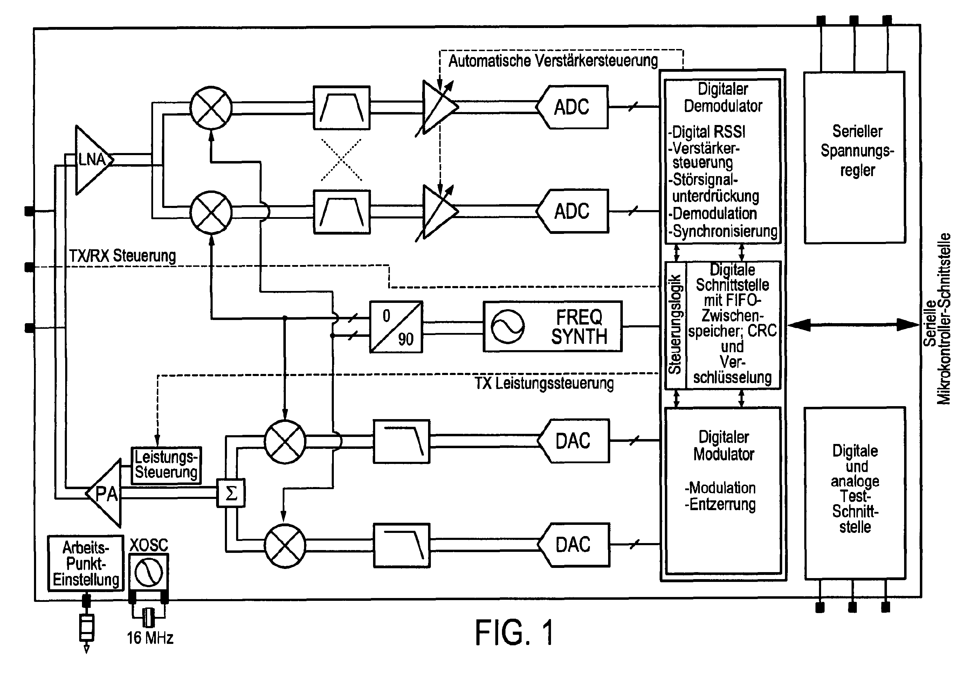

In Fig. 1 ist ein Blockdiagramm des populären CC2420 Single-Chip-Transceivers (Senderempfängers) der Firma TEXAS INSTRUMENTS für den IEEE 802.15.4 Standard gezeigt. Er steht beispielhaft für eine Reihe anderer Chips, wie der JN5139 der Firma JENNIC Ltd., der ML7065 der Firma OKI Semiconductor sowie der nRF2401A der Firma NORDIC Semiconductor, die die oben skizzierte Hardware-Unterstützung zur Umsetzung des Medienzugriffsprotokolls anbieten.

Wohingegen die Signallaufzeit bei den kurzen Distanzen zwischen den RFDs und die Datenübertragungsdauer bei Datenpaketgrößen von einigen Bytes lediglich einen sehr kurzen Zeitraum in Anspruch nehmen, sind die oben aufgeführten Verarbeitungsschritte des Koordinators zur Weiterleitung von Datenpaketen, insbesondere die Schritte, die durch eine Software umgesetzt werden, vergleichsweise zeitaufwendig und stehen einer Echtzeitverbindung zwischen zwei oder mehreren RFDs entgehen. Mitunter ist von Übertragungsverzögerungen von vielen Millisekunden auszugehen. Für viele Anwendungen ist diese lange Übertragungsverzögerung nicht akzeptabel, da erwünscht sein kann, dass auf gewisse gesendete Datenpakete eine schnelle Reaktion erfolgt. Man stelle sich beispielsweise einen Lichtschrankensensor (erstes RFD) und eine Schrittmotorsteuerung (zweites RFD) vor, bei denen die Motorsteuerung auf Signale des Lichtschrankensensors hin eine Bewegung auslösen muss. Der Begriff der Echtzeitverbindung bedeutet im Rahmen dieser Anmeldung, dass ein System innerhalb einer definierten Zeitspanne auf einen Stimulus eine Reaktion liefert. Diese Zeitspanne kann, abhängig vom System, durchaus einige Minuten betragen. Für Systeme, wie sie oben genannt wurden, nämlich beispielsweise aus dem Gebiet der Fertigungsautomatisierungstechnik oder des interaktiven Spielzeuges beträgt die Zeitpanne in etwa einige Millisekunden.

Der Einsatz leistungsfähigerer Prozessoren zur Verkürzung der Interrupt-Verzögerung durch die Software ist aufgrund der damit verbundenen höheren Leistungsaufnahme des Koordinators kein geeigneter Lösungsansatz.

Aus der Patentschrift DE 10 2007 003 634 B3 der vorliegenden Anmelderin ist ein Protokollbeschleunigermodul für eine Datensicherungsschicht eines Senderempfängers bekannt, der unter anderem dazu ausgebildet ist, empfangene Datenpakete auf erfolgreichen Empfang hin zu überprüfen und eine Speicheroperation für dieselben zu veranlassen, sowie eine Warteschlange eigener zu sendender Datenpakete zu verwalten und Datenpakete der Warteschlange zum Versenden innerhalb eines zugewiesenen Sendezeitschlitzes auszuwählen und einer Sendeeinheit zu übergeben.

Eine schnelle Weiterleitung von Datenzellen ist aus einem Asynchronous Transfer Mode (ATM) Datenübertragungsprotokoll bekannt. Bei dieser Technik realisiert eine sogenannte ATM-Switch die Weiterleitungsfunktion. Bei ATM-Switches wird jede ankommende ATM-Datenzelle von ihrem Eingangsport auf einen vorher festgelegten Ausgangsport geleitet. Dabei ist ausgangsseitig weder auf einen passenden Zeitschlitz noch auf den Absender der ATM-Datenzellen zu achten, da die Weiterleitung über sogenannte Kanal-Identifizierer, die Teil einer ATM-Datenzelle sind, geschieht und die Zuordnung von Kanal-Identifizierer zu Ausgangsports bei einem Verbindungsaufbau konfiguriert werden.

Aus der Veröffentlichung US 5,751,715 ist ein Protokollbeschleuniger bekannt, der gemäß einem TDMA Protokoll ein Bussystem bereichsweise bearbeitet. Das bereichsweise Bearbeiten des aufgeteilten Bussystems erfolgt mit Hilfe von Token sowie Prioritäten, die die zu übermittelnde Datenpaketen beinhalten oder diesen zugewiesen sind.

Der Nachteil der bekannten Protokollbeschleuniger ist, dass sie keine Funktion zur Beschleunigung einer Weiterleitung von Datenpaketen anbieten. Die genannten Protokollbeschleuniger sind somit für Senderempfänger, die eine Koordinatorrolle übernehmen, nur bedingt geeignet.

Deshalb ist ein der Erfindung zugrunde liegendes technisches Problem, ein Protokollbeschleunigermodul oder ein Betriebsverfahren für einen Senderempfänger vorzuschlagen, das eine schnelle Weiterleitung von Datenpaketen zweiter Senderempfänger an dritte Senderempfänger gestattet.

Gemäß einem ersten Aspekt der Erfindung wird das technische Problem durch ein Protokollbeschleunigermodul, nachfolgend als Beschleunigermodul bezeichnet, gemäß dem Anspruch 1 gelöst. Das erfindungsgemäße Beschleunigermodul ist ausgebildet, bei Empfang des Datenpaketes des zweiten Senderempfängers während eines ersten Zeitschlitzes eine Verweistabelle abzufragen, die Verweistabelle umfassend mindestens einen Verweis aus der Gruppe folgender Verweistypen:
a) Verweis eines bestimmten Empfangszeitschlitzes auf eine Kennung mindestens eines dritten Senderempfängers, wobei ein während des bestimmten Empfangszeitschlitzes vom Senderempfänger empfangenes Datenpaket an den dritten Senderempfänger weiterzuleiten ist;
b) Verweis einer Kennung eines bestimmten zweiten Senderempfängers als Sender auf eine Kennung mindestens eines dritten Senderempfängers als vorbestimmter Empfänger des Datenpaketes, nachfolgend als virtuelle Verbindung bezeichnet; oder
c) Verweis einer im Datenpaket enthaltenen vorbestimmten Nachricht auf eine Kennung mindestens eines dritten Senderempfängers als vorbestimmter Empfänger des Datenpaketes;

Schließlich ist das Beschleunigermodul ausgebildet, bei Vorhandensein eines dem Datenpaket entsprechenden Verweises eine Kennung eines dritten Senderempfängers als Empfänger des Datenpaketes in der Verweistabelle zu detektieren und während eines auf den ersten Zeitschlitz unmittelbar folgenden zweiten Zeitschlitzes ein Versenden des Datenpaketes an den dritten Senderempfänger zu veranlassen, falls der zweite Zeitschlitz dem Senderempfänger zugewiesen ist.

Zweite Senderempfänger bezeichnen im Rahmen dieser Anmeldung die Teilnehmer eines Sensornetzwerkes, die Datenpakete an dritte Senderempfänger übermitteln möchten. Dritte Senderempfänger bezeichnen im Rahmen dieser Anmeldung die Teilnehmer eines Sensornetzwerkes, die Datenpakete von zweiten Senderempfängern empfangen. Da in einem Bauelement sowohl Sender als auch Empfänger integriert sein kann, wird gemeinhin von Senderempfänger und nicht etwa von "Sendern" und Empfängern" gesprochen.

Der Erfindung liegt die Überlegung zugrunde, dass sich der Nachteil bekannter Beschleunigermodule insbesondere daraus ergibt, dass alle empfangenen Datenpakete kategorisch zunächst in einen empfängerseitigen Speicher des Senderempfängers geschrieben werden, auf den zu einem späteren Zeitpunkt ein Mikrocontroller oder eine ähnliche digitale Verarbeitungseinheit zugreift und durch eine Software-Routine feststellt, ob das Datenpaket weiterzuleiten ist oder nicht. Die bekannten Beschleunigermodule sind also nicht ausgebildet, zwischen weiterzuleitenden und nicht weiterzuleitenden Datenpaketen zu differenzieren.

Der Vorteil des erfindungsgemäßen Beschleunigermoduls hingegen ist es, dass es durch die Abfrage der Verweistabelle bereits bei dem Empfang des Datenpaketes während des ersten Zeitschlitzes eine Weiterleitungsentscheidung trifft. Damit ist es prinzipiell möglich, das Datenpaket schon im unmittelbar nächsten Zeitschlitz wieder auszusenden.

Die Kriterien, wonach das Beschleunigermodul ein Datenpaket zur Weiterleitung auswählt und welcher der eigentliche Empfänger des Datenpaketes sein soll, können anhand der Verweistypen konfiguriert werden. Eine Option besteht darin, alle Datenpakete, die innerhalb eines bestimmten Empfangszeitschlitzes empfangen wurden, immer an einen bestimmten dritten Senderempfänger zu senden (Verweistyp a). In diesem Fall braucht der Inhalt des Datenpaketes nicht analysiert zu werden, da die Kenntnis des Empfangszeitpunktes ausreichend ist. Wenn der Empfangszeitpunkt unberücksichtigt bleiben soll, kann das Beschleunigermodul anhand der Absenderadresse (Verweistyp b), die üblicherweise in einem Datenpaketkopf des Datenpaketes hinterlegt ist oder einer vorbestimmten Nachricht im Nutzdatenteil des Datenpaketes (Verweistyp c) die Weiterleitungsentscheidung treffen. Letztere Option hat den Vorteil, dass die Weiterleitung von Datenpaketen auch abhängig vom Inhalt der Nutzdaten realisiert werden kann. Eine vorbestimmte Nachricht kann eine Information eines zweiten Senderempfängers enthalten, die eine Vielzahl weiterer dritter Senderempfänger betrifft, wie beispielsweise
- der Erhalt eines speziellen Signals oder Wertes (z.B. "Not-Aus", Lichtschranke unterbrochen", "Motorstillstand");
- der Erhalt eines Wertes oberhalb oder unterhalb eines Schwellwertes bzw. innerhalb eines bestimmten Intervalls; oder
- die komplexe Verknüpfung eines oder mehrerer erhaltener Werte (Messwertvektor) desselben oder weiterer Sensoren.

Die Verwaltung der Verweistabelle, mit anderen Worten die Konfiguration der Weiterleitungsbedingungen, kann beispielsweise von einem Prozessor des Senderempfängers aus erfolgen.

In einer Ausführungsform des TDMA-basierten Datenübertragungsprotokolls beträgt die Dauer eines Zeitschlitzes in etwa 960 µs. Das bedeutet, dass eine Echtzeitanforderung von wenigen Millisekunden, die von einer Verbindung zwischen dem zweiten Senderempfänger und dem dritten Senderempfänger gestellt werden kann, mit dieser Lösung erfüllt werden kann. Somit eignet sich das erfindungsgemäße Beschleunigermodul insbesondere für einen Senderempfänger, der die Funktion eines Koordinators in einem Funknetzwerk bereitstellt.

Nachfolgend werden Ausführungsformen des erfindungsgemäßen Beschleunigermoduls beschrieben. Die zusätzlichen Merkmale der Ausführungsformen können zur Bildung neuer Ausführungsarten miteinander kombiniert werden, sofern sie nicht als Alternativen zueinander beschrieben sind.

Zweckmäßig ist das erfindungsgemäße Beschleunigermodul in einer Ausführungsform ausgebildet, bei Empfang des Datenpaketes des zweiten Senderempfängers während des ersten Zeitschlitzes eine im empfangenen Datenpaket enthaltene Empfängerkennung mindestens eines dritten Senderempfängers zu detektieren und während des zweiten Zeitschlitzes ein Versenden des Datenpaketes an den dritten Senderempfänger zu veranlassen, falls für das Datenpaket kein entsprechender Verweis in der Verweistabelle vorhanden ist und der zweite Zeitschlitz dem Senderempfänger zugewiesen ist.

Dies hat den Vorteil, dass auch Datenpakete, für die kein Verweis in der Verweistabelle hinterlegt ist, schnell weitergeleitet werden können. Die Weiterleitungsentscheidung wird in dieser Ausführungsform auf der Basis der im Nutzdatenteil des Datenpaketes enthaltenden Empfängerkennung getroffen.

In einer Ausführungsform ist das Beschleunigermodul in Hardware implementiert und umfasst eine empfängerseitige Datenpaketanalysevorrichtung, die ausgebildet ist, Nutzdaten des empfangenen Datenpaketes in einen Nutzdatenspeicher des Beschleunigermoduls zu schreiben und die detektierte Kennung des dritten Senderempfängers als Empfänger des Datenpaketes und eine Speicheradresse der gespeicherten Nutzdaten in einen Informationsspeicher zu schreiben.

Außerdem umfasst das Beschleunigermodul in dieser Ausführungsform eine senderseitige Steuereinheit, die ausgebildet ist, Zeitschlitzinformation über einen dem Senderempfänger zugewiesenen Zeitschlitz zu empfangen und eine in der Zeitschlitzinformation enthaltene Empfängerkennung eines dritten Senderempfängers zu erfassen und mit detektierten Empfängerkennungen des Informationsspeichers zu vergleichen.

Weiter ist die Steuereinheit ausgebildet, bei Übereinstimmung der in der Zeitschlitzinformation enthaltenen Empfängerkennung mit einer Empfängerkennung des Informationsspeichers der übereinstimmenden Empfängerkennung zugehörigen Nutzdaten des Nutzdatenspeichers anhand einer der übereinstimmenden Empfängerkennung zugeordneten Speicheradresse aufzurufen und eine Erzeugung eines den aufgerufenen Nutzdaten zuzufügenden Datenpaketkopfes zu veranlassen.

Schließlich ist die Steuereinheit ausgebildet, die aufgerufenen Nutzdaten und den erzeugten Datenpaketkopf einer Sendeeinheit des Senderempfängers als weiterzuleitendes Datenpaket zum Versenden im zugewiesenen Zeitschlitz bereitzustellen.

Für bestimmte Datenpakete kann es für das Beschleunigermodul zum Treffen einer Weiterleitungsentscheidung ausreichend sein, nur in Kenntnis des Empfangszeitpunktes (Verweistyp a) zu sein oder die Senderkennung des zweiten Senderempfängers aus dem Datenpaketkopf des eingehenden Datenpaketes zu ermitteln (Verweistyp b). In diesen Fällen ist eine Analyse der Nutzdaten des eingehenden Datenpaketes nicht notwendig. Sollen Datenpakete zweiter Senderempfänger bzw. Datenpakete, die in einem bestimmten Empfangszeitschlitz empfangen werden nicht automatisch an vorbestimmte dritte Senderempfänger weitergeleitet werden, so ermittelt die Datenpaketanalysevorrichtung entweder die Empfängerkennungen dritter Senderempfänger oder vorbestimmte Nachrichten aus den Nutzdaten des eingehenden Datenpaketes. Die Datenpaketanalysevorrichtung überträgt die Nutzdaten in den Nutzdatenspeicher und legt die Speicheradresse der Nutzdaten sowie die aus der Verweistabelle oder aus den Nutzdaten des Datenpaketes detektierten Kennungen dritter Senderempfänger im Informationsspeicher ab.

Die senderseitige Steuereinheit empfängt Zeitschlitzinformationen, die informieren, ob für den Senderempfänger ein Sendezeitschlitz zur Verfügung steht und für welchen dritten Senderempfänger dieser vorgesehen ist. Die Steuereinheit prüft, ob die Kennung dieses im Sendezeitschlitz vorgesehenen dritten Senderempfängers ebenfalls im Informationsspeicher hinterlegt ist. Ist dies der Fall, veranlasst die Steuereinheit eine Erzeugung eines Datenpaketkopfes mit der entsprechenden Kennung und stellt diesen sowie die anhand der Speicheradresse aufgerufenen Nutzdaten zum Versenden an den dritten Senderempfänger bereit. Die Erzeugung des Datenpaketkopfes beinhaltet, dass Adressfelder so gesetzt werden, dass das weiterzuleitende Datenpaket jetzt an den ermittelten dritten Senderempfänger als Empfänger gerichtet ist.

In der letzt genannten Ausführungsform umfasst der erfindungsgemäße Senderempfänger vorteilhafterweise eine empfängerseitige Entschlüsselungsvorrichtung die ausgebildet ist, während des ersten Zeitschlitzes ein von einem zweiten Senderempfänger her eingehendes verschlüsseltes Datenpaket zu entschlüsseln und eine senderseitige Verschlüsselungsvorrichtung, die ausgebildet ist, während des nächsten, dem Senderempfänger zugewiesenen Zeitschlitzes ein zu versendendes Datenpaket zu verschlüsseln, so dass das Beschleunigermodul auch in solchen Funknetzwerken eingesetzt werden kann, in denen der Datenpakettransfer verschlüsselt erfolgt.

In einer bevorzugten Ausführungsform des erfindungsgemäßen Beschleunigermoduls ist einem jeweiligen Verweistyp eine Priorität einer jeweiligen Höhe zugeordnet und das Beschleunigermodul ausgebildet, bei einem gleichzeitigen Vorhandensein einer Vielzahl für das empfangene Datenpaket zutreffender Verweise verschiedener Verweistypen ein Versenden des Datenpaketes entsprechend des Verweistyps höchster Priorität an den dritten Senderempfänger zu veranlassen.

Die Zuordnung von Prioritäten erleichtert die Organisation der Weiterleitung von Datenpaketen. Bei einem gleichzeitigen Vorhandensein einer Vielzahl für ein empfangenes Datenpaket zutreffender Verweise kann anhand der Prioritätshöhe ein Verweistyp ausgewählt werden und wiederum anhand von diesem die Kennung des dritten Senderempfängers als Empfänger des Datenpaketes in der Verweistabelle detektiert werden. Es ist aber auch denkbar, dass das Beschleunigermodul eine Weiterleitung des Datenpaketes entsprechend allen zutreffenden Verweisen veranlasst.

In einer weiteren bevorzugten Ausführungsform ist das erfindungsgemäße Beschleunigermodul ausgebildet, bestimmten virtuellen Verbindungen der Verweistabelle eine jeweilige maximale Verweildauer zuzuordnen und empfangene Datenpakete, welche entsprechend einer bestimmten virtuellen Verbindung weiterzuleiten sind, in Abhängigkeit einer jeweiligen verbleibenden Verweilzeit priorisiert zu versenden.

Natürlich können virtuelle Verbindungen von mehreren zweiten Senderempfängern als Sender zu einem einzigen dritten Senderempfänger als Empfänger aufgebaut werden und in der Verweistabelle hinterlegt sein. Dabei kann es zu einem Datenpaketstau kommen, wenn die Kanalkapazität während eines Sendezeitschlitzes nicht ausreicht. Eine Möglichkeit, das Versenden einer Vielzahl für einen einzigen dritten Senderempfänger bestimmter Datenpakete zu organisieren, ist die Zuordnung von Verweildauern für bestimmte virtuelle Verbindungen. Dabei werden jene Datenpakete zuerst versendet, deren verbleibende Verweilzeit am geringsten ist. Datenpakete, die nicht innerhalb ihrer jeweiligen Verweilzeit versendet werden konnten, können beispielsweise verworfen werden. Insbesondere eignet sich das Beschleunigermodul zur Ausführung von Aufgaben eines Datenübertragungsprotokolls nach dem Standard IEEE 802.15.4.

Gemäß einem zweiten Aspekt der Erfindung wird ein Senderempfänger mit einem Beschleunigermodul gemäß dem ersten Aspekt der Erfindung oder einem seiner hierin genannten Ausführungsformen vorgeschlagen. Der Senderempfänger des zweiten Aspekts der Erfindung teilt die Vorteile des Beschleunigermoduls des ersten Aspekts der Erfindung.

Bevorzugt ist der erfindungsgemäße Senderempfänger ausgebildet, ein für den Senderempfänger bestimmtes Datenpaket in einen empfängerseitigen Zwischenspeicher des Senderempfängers zu schreiben; eine Warteschlange zu sendender Datenpakete eines senderseitigen Zwischenspeichers des Senderempfängers zu verwalten und während eines dem Senderempfänger zugewiesenen Zeitschlitzes Datenpakete der Warteschlange auszuwählen und ein Versenden derselben an einen oder mehrere dritte Senderempfänger zu veranlassen.

Dies hat den Vorteil, dass der Senderempfänger nicht nur ausschließlich eine Funktion zur Weiterleitung von Datenpaketen bereitstellt, sondern selbst, beispielsweise als Sensor oder Aktor, in einem Funknetzwerk partizipieren kann.

Gemäß einem dritten Aspekt der Erfindung wird ein Sensorknoten mit einem Sensor und einem mit diesem verbundenen Senderempfänger gemäß dem zweiten Aspekt der Erfindung oder einem seiner hierin genannten Ausführungsformen vorgeschlagen. Der Sensorknoten des dritten Aspekts der Erfindung teilt die Vorteile des Senderempfängers des zweiten Aspekts der Erfindung.

Hinsichtlich ihres Verfahrensaspekts bildet die Erfindung ein Betriebsverfahren für einen Senderempfänger; das Betriebsverfahren umfassend Weiterleiten eines Datenpaketes eines zweiten Senderempfängers an einen oder mehrere dritte Senderempfänger entsprechend einem TDMA-basierten Datenübertragungsprotokoll, wobei das Weiterleiten die folgenden Schritte umfasst:
- Empfangen des Datenpaketes des zweiten Senderempfängers während eines ersten Zeitschlitzes;
- Abfragen einer Verweistabelle, die Verweistabelle umfassend mindestens einen Verweis aus der Gruppe folgender Verweistypen:
   a) Verweis eines bestimmten Empfangszeitschlitzes auf eine Kennung mindestens eines dritten Senderempfängers, wobei ein während des bestimmten Empfangszeitschlitzes vom Senderempfänger empfangenes Datenpaket an den dritten Senderempfänger weiterzuleiten ist;
   b) Verweis einer Kennung eines bestimmten zweiten Senderempfängers als Sender auf eine Kennung mindestens eines dritten Senderempfängers als vorbestimmter Empfänger des Datenpaketes, nachfolgend als virtuelle Verbindung bezeichnet; oder
   c) Verweis einer im Datenpaket enthaltenen vorbestimmten Nachricht auf eine Kennung mindestens eines dritten Senderempfängers als vorbestimmter Empfänger des Datenpaketes;
- Detektieren einer Kennung eines dritten Senderempfängers als Empfänger des Datenpaketes in der Verweistabelle, falls für das Datenpaket ein entsprechender Verweis vorhanden ist oder Detektieren einer Kennung eines dritten Senderempfängers in Nutzdaten des empfangenen Datenpaketes, falls für das Datenpaket kein entsprechender Verweis vorhanden ist; und
- Versenden des Datenpaketes an den dritten Senderempfänger während eines auf den ersten Zeitschlitz unmittelbar folgenden zweiten Zeitschlitzes, falls der zweite Zeitschlitz dem Senderempfänger zugewiesen ist.

Insbesondere eignet sich das Betriebsverfahren zur Ausführung von Aufgaben einer Datensicherungs-Protokollebene gemäß dem IEEE 802.15.4 in einem Senderempfänger.

Das erfindungsgemäße Betriebsverfahren teilt die Vorteile des Beschleunigermoduls des ersten Aspekts der Erfindung und seiner hierin genannten Ausführungsformen.

Weitere Vorteile der Erfindung werden bei der folgenden Beschreibung eines Ausführungsbeispiels anhand der Figuren erläutert. Es zeigen in schematischer Darstellung
- Figur 1: ein Blockdiagramm eines Ein-Chip-Senderempfängers gemäß dem Stand der Technik und

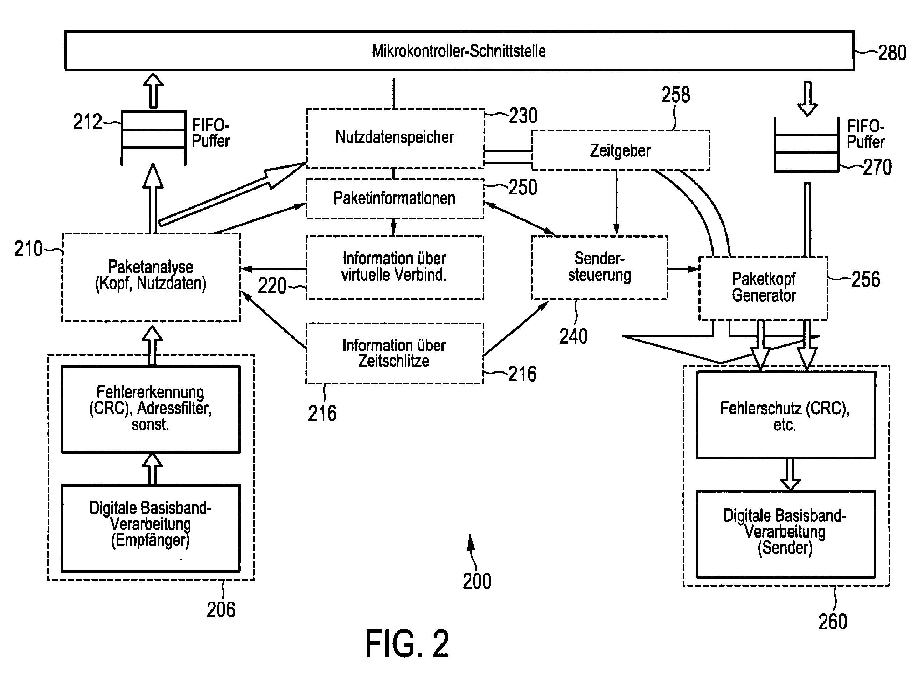

- Figur 2: ein Blockdiagramm eines Senderempfängers mit einem erfindungsgemäßen Protokollbeschleunigermodul.

Das erfindungsgemäße Beschleunigermodul ist zwischen einem Empfangs- und einem Sendepfad eines Senderempfängers 200 eingebettet. Eingangsseitig weist der Senderempfänger 200 eine Empfangseinheit 206 auf, die eingehende Datenpakete zweiter Senderempfänger entgegennimmt, nach Adressen filtert, bezüglich an den Senderempfänger adressierte Datenpakete eine CRC-Prüfsumme ausrechnet und diese Datenpakete der Datenpaketanalysevorrichtung 210 zuführt.

Die Datenpaketanalysevorrichtung 210 ermittelt, ob es sich bei dem Datenpaket um ein an einen dritten Sendempfänger weiterzuleitendes Datenpaket oder um ein für den Senderempfänger bestimmtes Datenpaket handelt. Dazu empfängt die Datenpaketanalysevorrichtung 210 Zeitschlitzinformationen 216 und fragt eine Verweistabelle 220 auf aktuell aufgebaute virtuellen Verbindungen ab. Die virtuellen Verbindungen können beispielsweise Verweise von Kennungen zweiter Senderempfänger, von vorbestimmten Nachrichten oder von Zeitschlitzen auf Kennungen dritter Senderempfänger sein.

Die Kriterien, wonach ein Datenpaket zur Weiterleitung ausgewählt und welcher der eigentliche Empfänger sein soll, können konfiguriert werden. Eine Option besteht darin, alle Datenpakete, die innerhalb eines bestimmten Zeitschlitzes empfangen wurden, immer an einen oder mehrere vorbestimmte dritte Senderempfänger zu senden. In diesem Fall braucht der Inhalt des Datenpaketes nicht berücksichtigt werden; die Kenntnis des Zeitpunkts des Empfangs genügt. Wenn der Empfangszeitpunkt unberücksichtigt bleiben soll, kann anhand der Absenderadresse, einer vorbestimmten Nachricht im Nutzdatenteil des Datenpakets (beispielsweise der Erhalt eines speziellen Signals wie "Not-Aus") oder anhand von in den Nutzdaten enthaltenen Kennungen dritter Senderempfänger die Entscheidung getroffen werden.

Erkennt die Datenpaketanalysevorrichtung 210 ein Datenpaket als weiterzuleitend, so schreibt sie Nutzdaten des Datenpaketes in einen Nutzdatenspeicher 230. Der Datenpaketkopf wird später von einem Datenpaketkopfgenerator 256 neu konstruiert. In einem Informationsspeicher 250 hinterlegt die Datenpaketanalysevorrichtung 210 die detektierte Kennung des dritten Senderempfängers als Empfänger des Datenpaketes und die Speicheradresse der Nutzdaten des Datenpaketes im Nutzdatenspeicher 230.

Auf diesen Informationsspeicher 250 greift senderseitig eine Steuereinheit 240 zu. Diese erhält von einem Zeitgeber 258 ein Signal, dass ein neuer Zeitschlitz begonnen hat. Über ein Verzeichnis der aktuell reservierten Zeitschlitze 216 stellt die Steuereinheit fest, ob und für welchen dritten Senderempfänger momentan ein Sendezeitschlitz für den Senderempfänger besteht. Falls das der Fall ist, untersucht sie den Informationsspeicher 250 dahingehend, ob für den dritten Senderempfänger ein Datenpaket gespeichert ist. Ist das ebenfalls der Fall, so veranlasst die Steuereinheit 240 das Erzeugen eines den Informationen entsprechenden Datenpaketkopfes durch den Datenpaketkopfgenerator 256. Dieser wird, sowie anschließend die unveränderten Datenpaketnutzdaten, der Sendeeinheit 260 zum Versenden an den oder die dritten Senderempfänger zugeführt.

Ist ein Datenpaket durch die Datenpaketanalysevorrichtung 210 als für den Senderempfänger bestimmtes Datenpaket erkannt worden, so veranlasst die Datenpaketanalysevorrichtung 210 eine Speicherung des Datenpakets in einem empfängerseitigen Zwischenspeicher 212, auf den ein Mikrocontroller zugreifen kann.

Der Senderempfänger umfasst weiterhin einen senderseitigen Zwischenspeicher 270, in dem von einem mit dem Senderempfänger verbundenen Modul, wie beispielsweise ein Sensor, erstellte Datenpakete hinterlegt sind. Das Versenden dieser Datenpakete erfolgt auf einer "First In, First Out" - Basis in Abstimmung mit den ihnen zugewiesenen Zeitschlitzen.

## Patentansprüche

1. Protokollbeschleunigermodul, nachfolgend als Beschleunigermodul bezeichnet, für einen Senderempfänger (200), wobei der Senderempfänger (200) ausgebildet ist, ein Datenpaket eines zweiten Senderempfängers an einen oder mehrere dritte Senderempfänger entsprechend einem TDMA-basierten Datenübertragungsprotokoll weiterzuleiten.
**dadurch gekennzeichnet, dass** und das Beschleunigermodul ausgebildet ist,
- bei Empfang des Datenpaketes des zweiten Senderempfängers während eines ersten Zeitschlitzes eine Verweistabelle (220) abzufragen, die Verweistabelle (220) umfassend mindestens einen Verweis aus der Gruppe folgender Verweistypen:
a) Verweis eines bestimmten Empfangszeitschlitzes auf eine Kennung mindestens eines dritten Senderempfängers, wobei ein während des bestimmten Empfangszeitschlitzes vom Senderempfänger (200) empfangenes Datenpaket an den dritten Senderempfänger weiterzuleiten ist;
b) Verweis einer Kennung des bestimmten zweiten Senderempfängers als Sender auf eine Kennung mindestens eines dritten Senderempfängers als vorbestimmter Empfänger des Datenpaketes, nachfolgend als virtuelle Verbindung bezeichnet; oder
c) Verweis einer im Datenpaket enthaltenen vorbestimmten Nachricht auf eine Kennung mindestens eines dritten Senderempfängers als vorbestimmter Empfänger des Datenpaketes;
- und bei Vorhandensein eines dem Datenpaket entsprechenden Verweises eine Kennung eines dritten Senderempfängers als Empfänger des Datenpaketes in der Verweistabelle (220) zu detektieren; und
- während eines auf den ersten Zeitschlitz unmittelbar folgenden zweiten Zeitschlitzes ein Versenden des Datenpaketes an den dritten Senderempfänger zu veranlassen, falls der zweite Zeitschlitz dem Senderempfänger (200) zugewiesen ist.

2. Beschleunigermodul nach Anspruch 1, das ausgebildet ist, bei Empfang des Datenpaketes des zweiten Senderempfängers während des ersten Zeitschlitzes eine im empfangenen Datenpaket enthaltene Empfängerkennung mindestens eines dritten Senderempfängers zu detektieren und während des zweiten Zeitschlitzes ein Versenden des Datenpaketes an den dritten Senderempfänger zu veranlassen, falls für das Datenpaket kein entsprechender Verweis in der Verweistabelle (220) vorhanden ist und der zweite Zeitschlitz dem Senderempfänger (200) zugewiesen ist.

3. Beschleunigermodul nach einem der vorhergehenden Ansprüche, wobei das Beschleunigermodul in Hardware implementiert ist, umfassend
eine empfängerseitige Datenpaketanalysevorrichtung (210), die ausgebildet ist,
- Nutzdaten des empfangenen Datenpaketes in einen Nutzdatenspeicher (230) des Beschleunigermoduls zu schreiben und
- die detektierte Kennung des dritten Senderempfängers als Empfänger des Datenpaketes und eine Speicheradresse der gespeicherten Nutzdaten in einen Informationsspeicher (250) zu schreiben;
und umfassend eine senderseitige Steuereinheit (240), die ausgebildet ist,
- Zeitschlitzinformation (216) über einen dem Senderempfänger (200) zugewiesenen Zeitschlitz zu empfangen;
- eine in der Zeitschlitzinformation (216) enthaltene Empfängerkennung eines dritten Senderempfängers zu erfassen und mit detektierten Empfängerkennungen des Informationsspeichers (250) zu vergleichen;
- bei Übereinstimmung der in der Zeitschlitzinformation (216) enthaltenen Empfängerkennung mit einer Empfängerkennung des Informationsspeichers (250) der übereinstimmenden Empfängerkennung zugehörigen Nutzdaten des Nutzdatenspeichers (230) anhand einer der übereinstimmenden Empfängerkennung zugeordneten Speicheradresse aufzurufen und eine Erzeugung eines den aufgerufenen Nutzdaten zuzufügenden Datenpaketkopfes zu veranlassen; und
- die aufgerufenen Nutzdaten und den erzeugten Datenpaketkopf einer Sendeeinheit (260) des Senderempfängers (200) als weiterzuleitendes Datenpaket zum Versenden im zugewiesenen Zeitschlitz bereitzustellen.

4. Beschleunigermodul nach einem der vorhergehenden Ansprüche, bei dem einem jeweiligen Verweistyp eine Priorität einer jeweiligen Höhe zugeordnet ist und das Beschleunigermodul ausgebildet ist, bei einem gleichzeitigen Vorhandensein einer Vielzahl für das empfangene Datenpaket zutreffender Verweise verschiedener Verweistypen ein Versenden des Datenpaketes entsprechend des Verweistyps höchster Priorität an den dritten Senderempfänger zu veranlassen.

5. Beschleunigermodul nach einem der vorhergehenden Ansprüche, das ausgebildet ist,
- bestimmten virtuellen Verbindungen der Verweistabelle (220) eine jeweilige maximale Verweildauer zuzuordnen; und
- empfangene Datenpakete, welche entsprechend einer bestimmten virtuellen Verbindung weiterzuleiten sind, in Abhängigkeit einer jeweiligen verbleibenden Verweilzeit priorisiert zu versenden.

6. Beschleunigermodul nach einem der vorhergehenden Ansprüche, das zur Ausführung von Aufgaben eines Datenübertragungsprotokolls gemäß dem Standard IEEE 802.15.4 in einem Senderempfänger (200) ausgebildet ist.

7. Senderempfänger (200) mit einem Beschleunigermodul nach einem der Ansprüche 1 bis 6.

8. Senderempfänger (200) nach Anspruch 7, der ausgebildet ist,
- ein für den Senderempfänger (200) bestimmtes Datenpaket in einen empfängerseitigen Zwischenspeicher (212) des Senderempfängers (200) zu schreiben;
- eine Warteschlange zu sendender Datenpakete eines senderseitigen Zwischenspeichers (270) des Senderempfängers (200) zu verwalten; und
- während eines dem Senderempfänger (200) zugewiesenen Zeitschlitzes Datenpakete der Warteschlange auszuwählen und ein Versenden derselben an einen oder mehrere dritte Senderempfänger zu veranlassen.

9. Sensorknoten mit einem Sensor und einem mit diesem verbundenen Senderempfänger (200) nach einem der Ansprüche 7 oder 8.

10. Betriebsverfahren für einen Senderempfänger (200), umfassend Weiterleiten eines Datenpaketes eines zweiten Senderempfängers an einen oder mehrere dritte Senderempfänger entsprechend einem TDMA-basierten Datenübertragungsprotokoll, **dadurch gekennzeichnet. dass** das Weiterleiten die folgenden Schritte umfasst:
- Empfangen des Datenpaketes des zweiten Senderempfängers während eines ersten Zeitschlitzes;
- Abfragen einer Verweistabelle (220), die Verweistabelle (220) umfassend mindestens einen Verweis aus der Gruppe folgender Verweistypen:
a) Verweis eines bestimmten Empfangszeitschlitzes auf eine Kennung mindestens eines dritten Senderempfängers, wobei ein während des bestimmten Empfangszeitschlitzes vom Senderempfänger (200) empfangenes Datenpaket an den dritten Senderempfänger weiterzuleiten ist;
b) Verweis einer Kennung des bestimmten zweiten Senderempfängers als Sender auf eine Kennung mindestens eines dritten Senderempfängers als vorbestimmter Empfänger des Datenpaketes, nachfolgend als virtuelle Verbindung bezeichnet; oder
c) Verweis einer im Datenpaket enthaltenen vorbestimmten Nachricht auf eine Kennung mindestens eines dritten Senderempfängers als vorbestimmter Empfänger des Datenpaketes;
- Detektieren einer Kennung eines dritten Senderempfängers als Empfänger des Datenpaketes in der Verweistabelle (220), falls für das Datenpaket ein entsprechender Verweis vorhanden ist oder Detektieren einer Kennung eines dritten Senderempfängers in Nutzdaten des empfangenen Datenpaketes, falls für das Datenpaket kein entsprechender Verweis vorhanden ist; und
- Versenden des Datenpaketes an den dritten Senderempfänger während eines auf den ersten Zeitschlitz unmittelbar folgenden zweiten Zeitschlitzes, falls der zweite Zeitschlitz dem Senderempfänger (200) zugewiesen ist.

11. Betriebsverfahren nach Anspruch 10, das zur Ausführung von Aufgaben einer Datensicherungs-Protokollebene gemäß dem Standard IEEE 802.15.4 in einem Senderempfänger (200) ausgebildet ist.

## Claims

1. Protocol accelerator module, hereinafter referred to as an accelerator module, for a transceiver (200), the transceiver (200) being configured to forward a data packet from a second transceiver to one or more third transceivers according to a TDMA-based data transmission protocol,
**characterised in that** the accelerator module is configured
- to interrogate a reference table (220) on receiving the data packet from the second transceiver, during a first time slot, the reference table (220) comprising at least one reference from the group of reference types that follow:
(a) reference of a specific receiving time slot to an identifier of at least one third transceiver, wherein a data packet received from the transceiver (200) during the specific receiving time slot is to be forwarded to the third transceiver;
(b) reference of an identifier of the specific second transceiver as a transmitter to an identifier of at least one third transceiver as a predetermined receiver of the data packet, hereinafter referred to as a virtual connection; or
(c) reference of a predetermined message contained in the data packet to an identifier of at least one third transceiver as a predetermined receiver of the data packet;
- and, if there is a reference corresponding to the data packet, to detect an identifier of a third transceiver as the receiver of the data packet in the reference table (220); and
- to cause the data packet to be sent to the third transceiver, during a second time slot immediately following the first time slot, if the second time slot is allocated to the transceiver (200).

2. Accelerator module according to claim 1 which is configured, on receiving the data packet from the second transceiver during the first time slot, to detect a receiver identifier of at least one third transceiver contained in the data packet received and to cause the data packet to be sent to the third transceiver during the second time slot, if there is no corresponding reference for the data packet in the reference table (220) and the second time slot is allocated to the transceiver (200).

3. Accelerator module according to one of the preceding claims, wherein the accelerator module is provided in the form of hardware, comprising
a data packet analyser (210) at the receiver end, which is configured
- to write useful data from the data packet received in a useful data memory (230) of the accelerator module and
- to write the detected identifier of the third transceiver as the receiver of the data packet and to write a memory address of the stored useful data in a data memory (250);
and comprising a control unit (240) at the transmitter end, which is configured
- to receive time slot information (216) via a time slot allocated to the transceiver (200);
- to detect a receiver identifier of a third transceiver contained in the time slot information (216) and compare it with detected receiver identifiers of the data memory (250);
- if the receiver identifier contained in the time slot information (216) agrees with a receiver identifier of the data memory (250), to call up useful data of the useful data memory (230) belonging to the agreeing receiver identifier by means of a memory address assigned to the agreeing receiver identifier, and to cause a data packet header to be generated which is to be added to the useful data called up; and
- to prepare the useful data called up and the data packet header generated, as a data packet which is to be forwarded, for sending to a transmitter unit (260) of the transceiver (200) in the allocated time slot.

4. Accelerator module according to one of the preceding claims, wherein a priority of a respective level is assigned to a particular type of reference and the accelerator module is configured so that, in the event of the simultaneous presence of a plurality of references of different types that are applicable to the data packet received, it causes the data packet to be sent to the third transceiver according to the highest priority reference type.

5. Accelerator module according to one of the preceding claims, which is configured
- so as to assign a maximum retention time to certain virtual connections in the reference table (220); and
- so as to send received data packets which are to be forwarded according to a specific virtual connection as a priority depending on the respective retention time remaining.

6. Accelerator module according to one of the preceding claims which is configured for executing functions of a data transmission protocol according to the standard IEEE 802.15.4 in a transceiver (200).

7. Transceiver (200) having an accelerator module according to one of claims 1 to 6.

8. Transceiver (200) according to claim 7, which is configured
- to write a data package intended for the transceiver (200) in an intermediate memory (212) at the receiver end of the transceiver (200);
- to manage a queue of data packets that are to be transmitted from an intermediate memory (270) at the transmitter end of the transceiver (200); and
- to select data packets from the queue during a time slot assigned to the transceiver (200) and to cause them to be sent to one or more third transceivers.

9. Sensor node having a sensor and a transceiver (200) connected thereto, according to one of claims 7 or 8.

10. Operating method for a transceiver (200), comprising forwarding a data packet from a second transceiver to one or more third transceivers according to a TDMA-based data transmission protocol,
**characterised in that** the forwarding comprises the following steps:
- receiving the data packet from the second transceiver during a first time slot;
- interrogating a reference table (220), the reference table (220) comprising at least one reference from the group of reference types that follow:
a) reference of a specific receiving time slot to an identifier of at least one third transceiver, wherein a data packet received from the transceiver (200) during the specific receiving time slot is to be forwarded to the third transceiver;
b) reference of an identifier of the specific second transceiver as a transmitter to an identifier of at least one third transceiver as a predetermined receiver of the data packet, hereinafter referred to as a virtual connection; or
(c) reference of a predetermined message contained in the data packet to an identifier of at least one third transceiver as a predetermined receiver of the data packet;
- detecting an identifier of a third transceiver as the receiver of the data packet in the reference table (220), if a corresponding reference is present for the data packet, or detecting an identifier of a third transceiver in useful data of the data packet received, if no corresponding reference is available for the data packet; and
- sending the data packet to the third transceiver during a second time slot immediately following the first time slot, if the second time slot is allocated to the transceiver (200).

11. Operating method according to claim 10, which is configured for executing functions of a data protection protocol level according to the standard IEEE 802.15.4 in a transceiver (200).

## Revendications

1. Module accélérateur de protocole, appelé ci-après module accélérateur, pour un émetteur-récepteur (200), l'émetteur-récepteur (200) étant réalisé pour retransmettre un paquet de données d'un deuxième émetteur-récepteur à un ou plusieurs troisièmes émetteurs-récepteurs, de manière correspondante à un protocole de transmission de données à base TDMA,
**caractérisé en ce que** le module accélérateur est réalisé pour :
- à réception du paquet de données du deuxième émetteur-récepteur, pendant une première fenêtre temporelle, interroger une table d'adressage (220), la table d'adressage (220) comprenant au moins un adressage issu du groupe des types d'adressage suivants :
a) adressage d'une fenêtre temporelle de réception déterminée à une identification d'au moins une troisième émetteur-récepteur, un paquet de données, reçu de l'émetteur-récepteur (200) pendant la fenêtre temporelle de réception déterminée, étant à retransmettre au troisième émetteur-récepteur ;
b) adressage d'une identification du deuxième émetteur-récepteur déterminé, en tant qu'émetteur, à une identification d'au moins un troisième émetteur-récepteur, en tant que récepteur prédéterminé du paquet de données, appelé ci-après liaison virtuelle ; ou
c) adressage d'un message prédéterminé, contenu dans le paquet de données, à une identification d'au moins un troisième émetteur-récepteur, en tant que récepteur prédéterminé du paquet de données ;
- et, en cas de présence d'un adressage correspondant au paquet de données, détecter une identification d'un troisième émetteur-récepteur, en tant que récepteur du paquet de données, dans la table d'adressage (220) ; et
- pendant une deuxième fenêtre temporelle, directement subséquente à la première fenêtre temporelle, provoquer un envoi du paquet de données au troisième émetteur-récepteur, dans le cas où la deuxième fenêtre temporelle est affectée à l'émetteur-récepteur (200).

2. Module accélérateur de protocole selon la revendication 1, **caractérisé en ce que**, à réception du paquet de données du deuxième émetteur-récepteur, pendant la première fenêtre temporelle, une identification de récepteur, contenue dans le paquet de données reçu, détecter au moins un troisième émetteur-récepteur et, pendant la deuxième fenêtre temporelle, provoquer un envoi du paquet de données au troisième émetteur-récepteur, dans le cas où aucun renvoi correspondant pour le paquet de données ne se trouve dans la table d'adressage (220) et où la deuxième fenêtre temporelle est affectée à l'émetteur-récepteur (200).

3. Module accélérateur de protocole selon l'une des revendications précédentes, dans lequel le module accélérateur est mis en oeuvre dans la circuiterie, comprenant :
un dispositif d'analyse de paquets de données (210), situé côté réception, réalisé pour :
- écrire des données utiles du paquet de données reçu dans une mémoire à données utiles (230) du module accélérateur, et
- écrire dans une mémoire à informations (250) l'identification détectée du troisième émetteur-récepteur, en tant que récepteur du paquet de données, et une adresse mémoire des données utiles stockées en mémoire,
et comprenant une unité de commande (240), située côté émetteur, réalisée pour :
- recevoir une information de fenêtre temporelle (216) concernant une fenêtre temporelle affectée à l'émetteur-récepteur (200) ;
- détecter une identification de récepteur, contenue dans l'information de fenêtre temporelle (216), d'un troisième émetteur-récepteur et comparer à des identifications de récepteur détectées de la mémoire à informations (250) ;
- en cas de coïncidence de l'identification de récepteur, contenue dans l'information de fenêtre temporelle (216), avec une identification de récepteur de la mémoire à informations (250), interroger des données utiles, afférentes à l'identification de récepteur coïncidant, de la mémoire à données utiles (230), à l'aide d'une adresse mémoire associée à l'identification de récepteur coïncidant, et provoquer une génération d'une en-tête de paquet de données à adjoinre aux données utiles obtenues par interrogation ; et
- fournir les données utiles obtenues par interrogation et l'en-tête de paquet de données générée à une unité d'envoi (260) de l'émetteur-récepteur (200), en tant que paquet de données à retransmettre, pour envoi dans la fenêtre temporelle affectée.

4. Module accélérateur de protocole selon l'une des revendications précédentes, dans lequel une priorité d'une hauteur respective est affectée à un type de renvoi respectif, et le module accélérateur est réalisé pour provoquer un envoi au troisième émetteur-récepteur du paquet de données correspondant au type d'adressage ayant la priorité la plus haute, en cas de présence simultanée d'une pluralité d'adressages, concernant le paquet de données reçu, présentant des types d'adressage différents.

5. Module accélérateur de protocole selon l'une des revendications précédentes, réalisé pour :
- attribuer un temps de séjour maximal respectif à des liaisons virtuelles déterminées de la table d'adressage (220): et
- envoyer des paquets de données reçus, à retransmettre de manière correspondante à une liaison virtuelle déterminée, de manière priorisée en fonction d'un temps de séjour subsistant respectif.

6. Module accélérateur de protocole selon l'une des revendications précédentes, réalisé pour l'accomplissement de tâches d'un protocole de transmission de données selon le standard IEEE 802.15.4 dans un émetteur-récepteur (200).

7. Emetteur-récepteur (200) avec un module accélérateur selon l'une des revendications 1 à 6.

8. Emetteur-récepteur (200) selon la revendication 7, réalisé pour :
- écrire un paquet de données, déterminé pour l'émetteur-récepteur (200), dans une mémoire intermédiaire (212), située côté récepteur, de l'émetteur-récepteur (200) ;
- gérer une fil d'attente de paquets de données, à envoyer, d'une mémoire intermédiaire (270), située côté émetteur, de l'émetteur-récepteur (200) ; et
- pendant une fenêtre temporelle affectée à l'émetteur-récepteur (200), sélectionner des paquets de données de la file d'attente et provoquer un envoi de ceux-ci à un ou plusieurs troisièmes émetteurs-récepteurs.

9. Noeud à capteur, avec un capteur et un émetteur-récepteur (200), relié à celui-ci, selon l'une des revendications 7 ou 8.

10. Procédé de fonctionnement pour un émetteur-récepteur (200), comprenant la retransmission d'un paquet de données d'un deuxième émetteur-récepteur à un ou plusieurs troisièmes émetteurs-récepteurs, de manière correspondante à un protocole de transmission de données à base TDMA,
**caractérisé en ce que** la retransmission comprend les étapes suivantes :
- réception du paquet de données du deuxième émetteur-récepteur, pendant une première fenêtre temporelle
- interrogation d'une table d'adressage (220), la table d'adressage (220) comprenant au moins un adressage issu du groupe des types d'adressage suivants :
a) adressage d'une fenêtre temporelle de réception déterminée à une identification d'au moins un troisième émetteur-récepteur, un paquet de données, reçu de l'émetteur-récepteur (200) pendant la fenêtre temporelle de réception déterminée, étant à retransmettre au troisième émetteur-récepteur ;
b) adressage d'une identification du deuxième émetteur-récepteur déterminé, en tant qu'émetteur, à une identification d'au moins un troisième émetteur-récepteur, en tant que récepteur prédéterminé du paquet de données, appelé ci-après liaison virtuelle ; ou
c) adressage d'un message prédéterminé, contenu dans le paquet de données, à une identification d'au moins un troisième émetteur-récepteur, en tant que récepteur prédéterminé du paquet de données ;
- détection d'une identification d'un troisième émetteur-récepteur, en tant que récepteur du paquet de données, dans la table d'adressage (220), en cas de présence d'un adressage correspondant pour le paquet de données, ou détection d'une identification d'un troisième émetteur-récepteur, dans des données utiles du paquet de données reçu, dans le cas où il n'y a aucun adressage correspondant pour le paquet de données ; et
- envoi du paquet de données au troisième émetteur-récepteur pendant une deuxième fenêtre temporelle, directement subséquente à la première fenêtre temporelle, , dans le cas où la deuxième fenêtre temporelle est affectée à l'émetteur-récepteur (200).

11. Procédé de fonctionnement selon la revendication 10, réalisé pour l'accomplissement de tâches d'un plan de protocole de sécurisation de données selon le standard IEEE 802.15.4 dans un émetteur-récepteur (200).
